# EUROPEAN PATENT APPLICATION

(11) **EP 4 545 343 A2**
(43) Date of publication of application: **30.04.2025**
(21) Application number: 25164125.4
(22) Date of filing: 05.11.2020
(51) Int. Cl.: B60L 5/19

(54) **SYSTEM FOR ELECTRICALLY FEEDING AT LEAST ONE ELECTRICALLY POWERED VEHICLE**

(62) Divisional of application: 20803150.0
(71) Applicant: BLUVEIN INNOVATION PTY. LTD., Northgate, QLD 4014 (AU)
(72) Inventor: Asplund, Gunnar, 171 60 Solna (SE)
(74) Representative: Groth & Co. KB

(57) **Abstract**

System for electrically feeding electrically powered vehicles comprising at least one suspended elongated slotted element having electric conductor(s) arranged in slot(s) and at least one current collector co-acting with the slotted element. The current collector(s) comprises contact element(s) and collector arm(s) supporting the contact element(s) at its first end and is adapted to connect to an electrically powered vehicle with its second end. The collector arm(s) is formed by at least two serially arranged arm segments. A first arm segment is provided with forcing means arranged to, when the first arm segment is within a working distance from the slotted element, provide a force towards the slotted element such that the contact element connects with the corresponding electric conductor. The second arm segment is provided with at least one actuator acting on the second arm segment to displace the first arm segment to a position within the working distance.

## Description

### TECHNICAL FIELD

The invention relates to the field of electrical feeding of vehicles, and in particular electrical feeding of mining/underground vehicles.

### BACKGROUND

Concerns about the environmental impact of combustion of fossil fuels have led to an increased interest in electric vehicles, which have several potential benefits compared to vehicles with conventional internal combustion engines, including: a significant reduction of air pollution, as they do not emit harmful tailpipe emissions, reduced greenhouse gas emissions (depending on the fuel and technology used for electricity generation and/or charging the batteries) and reduced dependency on fossil fuels with increasingly variable supply and fluctuating prices. In underground applications such as mines, air pollution is particularly problematic.

One disadvantage to be overcome is the limited range of existing electric vehicles due to limitations in battery capacity. This is a particularly significant disadvantage for heavy vehicles such as long haulage trucks as well as construction and mining vehicles.

WO 2016/174030 discloses a system for electrical feeding of a vehicle in an underground environment such as a mine. The electrical feeding is used to propel the vehicle directly and/or to charge an onboard battery. The system comprises at least one elongated slotted element having at least one slot or groove in which electric conductors are arranged. The slotted element is suspended for example from the ceiling in the mine tunnels, and a current collector connects the vehicle electrically to the slotted element.

Such a system is advantageous since it not only provides low emissions, reduced need for battery capacity, but also good safety properties due to the slotted electric conductors. One problem however with such a system is that the height of the mine tunnels typically varies which means that the distance between the vehicle and the slotted element can vary substantially while the vehicle is moving. The distance can also vary quite quickly due to bumps and depressions in the road surface. Known current collectors for example as disclosed in WO 2016/174030 may not be able to handle such quick variations in distance between the vehicle and the slotted element. Thus, there is a need for an improved current collector for use in mining applications.

### SUMMARY

An object of the invention is to solve or improve on at least some of the problems mentioned above in the background section.

These and other objects are achieved by the present invention by means of a system and method according to the independent claims.

According to a first aspect of the invention, a system for electrically feeding at least one electrically powered vehicle is provided. The system comprises at least one elongated slotted element being suspended (or adapted to be suspended) and extending along a road section/roadway/travelway on which the at least one vehicle is adapted to travel, and at least one current collector being adapted to co-act with said at least one elongated slotted element. The elongated slotted element comprises at least one electric conductor arranged in at least one slot in said elongated slotted element and being adapted to be electrically energized. At least one or each of the current collector comprises at least one contact element and at least one collector arm. At least one of the contact element(s) is adapted to connect mechanically and electrically with a corresponding electric conductor of said elongated slotted element. At least one or each of the collector arm(s) supports at least one contact element at its first end and is adapted to directly or indirectly connect to an electrically powered vehicle with its second end. The at least one or each of the collector arm(s) is/are formed by at least two serially arranged arm segments comprising first and second arm segments being directly or indirectly connected to each other. The first arm segment comprises said first end of the collector arm, said first arm segment being provided with forcing means arranged to, when said first arm segment is within a working distance from the elongated slotted element, provide a force towards the elongated slotted element such that the contact element connects with the corresponding electric conductor. The second arm segment is provided with at least one actuator configured to act on the second arm segment to displace the first arm segment to a position within said working distance.

As described above, a system for electrically feeding one or more electrically powered vehicles is provided, which vehicles may be ground vehicles, road vehicles, mining vehicles or conveyances. The system comprises one or more slotted elements being elongated, which in this context means having a greater length than width and height. The system preferably comprises a plurality of such elements arranged consecutively along the extension of the road. It is understood that the elongated slotted element being suspended refers to that it is arranged above the road surface, for instance by being suspended from for example a ceiling or wall of a mining tunnel or from one or more stands, posts or the like. The elongated slotted element comprises at least one slot or groove extending along the lengthwise direction of the elongated slotted element with at least one electric conductor arranged in at least one of the slots or grooves. The elongated slotted element does not necessarily need to be suspended vertically, i.e. with its slots facing vertically downwards. On the contrary, the elongated slotted element may even be suspended horizontally, i.e. with its slots facing sideways, or at any angle between a horizontal and vertical position. It is understood that any reference herein to the lengthwise/longitudinal direction and lateral direction is defined with respect to the slotted element.

The at least one contact element may be formed as one, two, or a plurality of elements having at least a contact surface of a conductive material being adapted to connect electrically and mechanically with a corresponding electric conductor. The at least one or each of the collector arm(s) is formed by at least two serially arranged arm segments comprising first and second arm segments being directly or indirectly connected to each other in the sense that the first arm segment may connect directly to the second arm segment for example via a rotational joint or indirectly a lateral sliding mechanism, or via an intermediate third arm segment. Further, the second arm segment does not necessarily connect directly to a vehicle via for example a rotational/pivotal connection joint but may connect indirectly via a further arm segment. The first arm segment comprises the first end of the collector arm in the sense that at least one contact element is connected directly or indirectly thereto, for example via a tracking device which guides/aligns the at least one contact element with the corresponding electrical conductor(s). Regardless if the second arm segment is directly or indirectly connected to the first arm segment, the at least one actuator is configured to act directly or indirectly on the second arm segment to displace the first arm segment to a position within the working distance from the slotted element. The at least one actuator is configured to act on the second arm segment in the sense that it provides a force directly onto at least a part of the second arm segment, or onto another arm segment which in turn transmits the force indirectly to the second arm segment. The first and/or second arm segments may be formed by a single elongated arm element or may comprise two or more parallel arm elements.

The invention is based on the insight that a varying distance between the vehicle and the slotted element can be handled in an improved manner by dividing the collector arm into two or more serially arranged arm segments, where an upper/first arm segment is configured to handle smaller/quicker deviations within a working distance from the slotted element, and where a lower/second arm segment is arranged to handle larger/slower deviations by means of an actuator configured to maintain the upper/first arm segment within its working distance.

In embodiments, the first arm segment and said forcing means are configured such that displacement thereof is faster than displacement of the second arm segment by means of the at least one actuator. This may for example be achieved by means of said first arm segment having a smaller moving mass and/or shorter length than the second arm segment. Furthermore, the forcing means may be configured to provide a stronger force and/or shorter response time than said at least one actuator. For example, the forcing means may be a spring or another type of resilient member, whereas the at least one actuator may comprise an electric motor, hydraulic actuator or the like.

In embodiments, the forcing means is configured to provide said force being above a predetermined threshold value when said first arm segment is within a working distance from the elongated slotted element. The threshold value is chosen such that the contact element(s) is/are forced with sufficient force to maintain adequate electrical contact with the electric conductor(s).

In embodiments, the forcing means comprises a resilient element providing a resilient force towards said corresponding electric conductor. Such a resilient element is advantageous since it may instantly/quickly adjust to increased distance between the vehicle and slotted element. The resilient element may be a mechanical or pneumatic spring. In embodiments where the first arm segment is rotationally connected to the second arm segment, the spring may be a spiral torsion spring acting around a rotational axis of the first arm segment.

The forcing means may furthermore comprise a pre-tensioning actuator configured to pre-tension the resilient element. Such a pre-tensioning actuator may be advantageous since the resilient element may be pre-tensioned or compressed while the at least one actuator of the second arm segment positions the first arm segment within said working distance. In other embodiments, the at least one actuator of the second arm segment is used to pre-tension the resilient element when forcing the first arm segment into position within the working distance.

In an alternative embodiment the forcing means is formed by said first arm segment being at least partly formed from a resilient material. In other words, the first arm segment itself acts as a spring. In yet an alternative embodiment, the forcing means comprises actuating means configured to provide said force. The actuating means may for example be a motor, a hydraulic actuator or a pneumatic actuator.

In embodiments, the first arm segment is directly or indirectly connected to the second arm segment by means of at least one rotational/hinge joint, i.e. providing rotation/movement relative the second arm segment in one or more planes, for instance in a vertical plane. Alternatively, it may be connected by means of a ball joint, i.e. providing rotation and translatory movement in all directions. The forcing means may be configured to rotate the second arm segment around one or more rotational axes which may be defined by the rotational joint(s).

In embodiments, the second arm segment comprises or is connected to at least one rotational or hinge joint directly or indirectly rotationally connecting the second arm segment to the vehicle, i.e. providing rotation/movement relative the vehicle in one or more planes, for instance in a vertical plane. Alternatively, it may be connected by means of a ball joint, i.e. providing rotation and translatory movement in all directions. The at least one actuator may be configured to rotate the second arm segment around one or more rotational axes which may be defined by the rotational joint(s).

In embodiments, the second arm segment is a telescopic arm directly or indirectly connectable to the vehicle. The at least one actuator may be configured to extend and withdraw the telescopic arm for example by comprising a hydraulic actuator.

In embodiments, the system further comprises a sliding device arranged between the first and second arm segments. The sliding device is configured to allow lateral movement of the first arm segment relative the second arm segment. The sliding device may comprise a slide carrying the first arm segment, the slide riding on one or more laterally directed rails, rods or the like of a lower part of the sliding device, and actuating means such as a motor arranged to displace the slide laterally.

In an alternative embodiment, the system further comprising a sliding device arranged at the second end of the collector arm to allow lateral movement of the collector arm relative the vehicle. The sliding device may comprise a slide carrying the second end of the collector arm, said slide riding on one or more laterally directed rails, rods or the like of a lower part of the sliding device, and actuating means such as a motor arranged to displace the slide laterally.

In embodiments, the system comprises an electronic control unit (ECU) configured to control the at least one actuator of the second arm segment to displace or maintain the first arm segment at a position within the working distance. The control of the at least one actuator may for instance be achieved in response to a signal from a sensor sensing the distance between the second end of the collector arm and the slotted element, or by means of force control sensing the applied force to the at least one actuator. The ECU may furthermore be configured to control the actuating means of the sliding device, for instance in response to a sensor signal indicating the lateral position of the first arm segment and/or contact element(s) relative the slotted element.

In embodiments, the system further comprises the at least one electrically powered vehicle.

According to a second aspect of the invention, a method for electrically feeding at least one electrically powered vehicle using a system according to any of the preceding claims is provided. The method comprises controlling the at least one actuator of said second arm segment to displace the first arm segment to a position within said working distance.

According to a third aspect of the invention, a system for electrically feeding at least one electrically powered vehicle is provided. The system according to the third aspect corresponds to the system according to the first aspect, but with the difference being that the elongated slotted element is replaced with an elongated element having at least one electric conductor mounted thereto (but not necessarily in at least one slot), or one or more elongated elements being conductive themselves and being adapted to be electrically energized. Alternatively, the elongated slotted element is replaced with at least one (exposed) electric conductor adapted to be suspended on their own or from a mounting device.

The features of the embodiments described above are combinable in any practically realizable way to form embodiments having combinations of these features. Further, all features and advantages of embodiments described above with reference to the first aspect of the invention may be applied in corresponding embodiments of the second and third aspects of the invention.

### BRIEF DESCRIPTION OF THE DRAWINGS

Above discussed and other aspects of the present invention will now be described in more detail using the appended drawings, which show presently preferred embodiments of the invention, wherein:
fig. 1 shows a schematic side view illustration of an embodiment of the system according to the invention along with an electrically powered vehicle;
figs. 2a-2c show side view illustrations of the embodiment in fig. 1 in three different states;
fig. 3 shows a schematic side view illustration of another embodiment of the system (shown without the slotted element);
fig. 4 shows a perspective view of the embodiment in fig. 3;
fig. 5 shows a front view of the embodiment in fig. 3 (shown with the slotted element), and
fig. 6 shows a front view of yet another embodiment of the system according to the invention.

### DETAILED DESCRIPTION

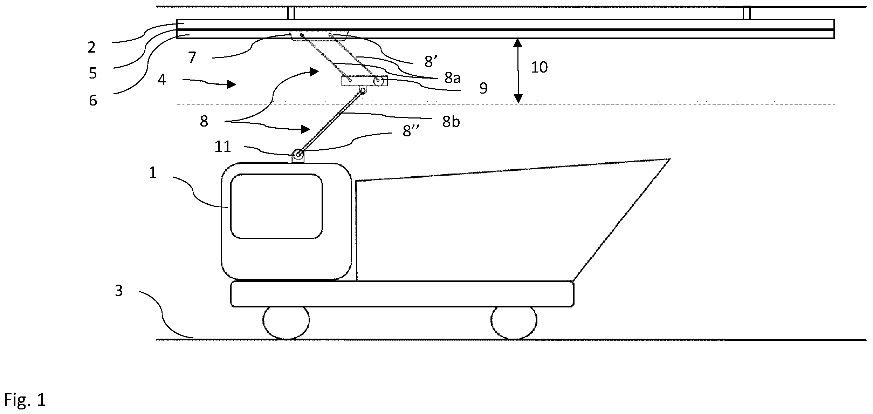

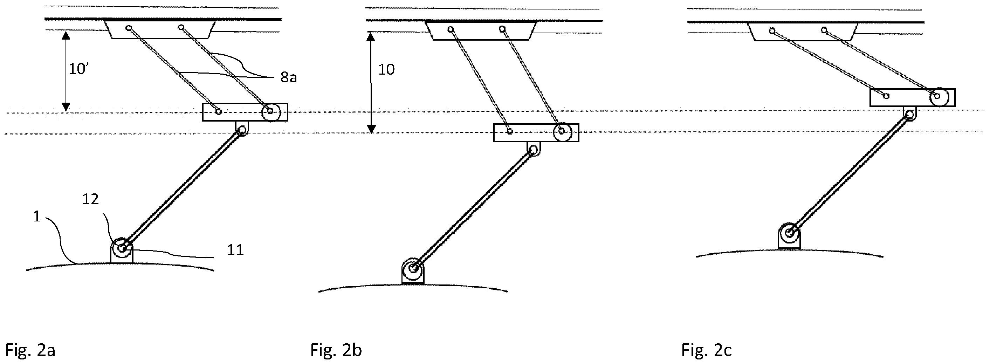

Fig. 1 shows a schematic side view illustration of an embodiment of the system according to the invention along with an electrically powered mining vehicle 1. The system comprises an elongated slotted element 2 being suspended from the ceiling of the mining tunnel and extends along the roadway 3 on which the vehicle 1 travels. A current collector 4 is adapted to co-act with the elongated slotted element. The elongated slotted element comprises two electric conductors 5 (only one can be seen in the cross-section of the slotted element) arranged in a respective slot in the elongated slotted element. The electric conductors are electrically energized. The current collector comprises two contact elements 7 (only one can be seen) attached to the collector arm 8. The contact elements connect mechanically and electrically with the electric conductors 5 by extending into the top of the slots 6 (where the electric conductors are provided). The collector arm 8 supports the contact elements at its first end 8' and connects to the electrically powered vehicle with its second end 8". The collector arm is formed by first and second serially arranged arm segments 8a, 8b being connected to each other. The first arm segment 8a comprises the first end 8' of the collector arm. The first arm segment 8a is formed by four parallel arm elements (only two are seen in the figure) connected to the second arm segment by means of rotational joints at both ends to allow rotation of the arm elements in parallel vertical planes. The first arm segment is provided with forcing means 9 in the form of a spiral torsional spring arranged to, when the first arm segment 8a is within a working distance 10 from the elongated slotted element, provide a force towards the elongated slotted element such that the contact elements 7 connect with the corresponding electric conductors 5. The spiral torsional spring 9 acts on two of arm elements (only one is seen, to the right in the figure) to provide rotation around the rotational axis defined by the rotational joint. The second arm segment 8b comprises the second end 8" of the collector arm and is connected via a rotational/hinge joint 12 (see fig. 2a) to the vehicle 1 to rotate in a vertical plane. The second arm segment 8b is provided with at least one actuator 11 in the form of an electric motor configured to rotate/pivot the second arm segment around the rotational axis defined by the rotational/hinge joint to displace the first arm segment 8a to a position within said working distance.

Figs. 2a-2c show side view illustrations of the embodiment in fig. 1 in three different states. Fig. 2a corresponds to the state shown in fig. 1 where the lower ends of the arm elements of the first arm segment 8a are disposed at an initial distance 10' from the slotted element, which distance 10' is shorter than the working distance 10 which means that the spiral torsional spring forces the contact elements with sufficient force against the conductors. In fig. 2b, the vehicle has driven into a recess/depression in the road surface which means that the distance between the vehicle and the slotted element has increased. The first arm segment is however still within the working distance 10 which means that the spiral torsional spring still provides sufficient force to keep the contact elements in contact with the conductors even though the actuator 11 has not yet responded by rotating the first arm segment counter clockwise back to the initial position at distance 10'. In fig. 2c, the vehicle has driven up on a bump/elevation on the road surface. The distance is now even shorter than in fig. 2a, so the contact elements remain in contact with the conductors. If the distance is maintained as shown in fig. 2b or 2c, the ECU will control the actuator 11 to adjust the second arm segment 8b such that the lower ends of the arm elements of the first arm segment 8a are disposed at the initial distance 10' from the slotted element to allow further movement up/downwards from this state.

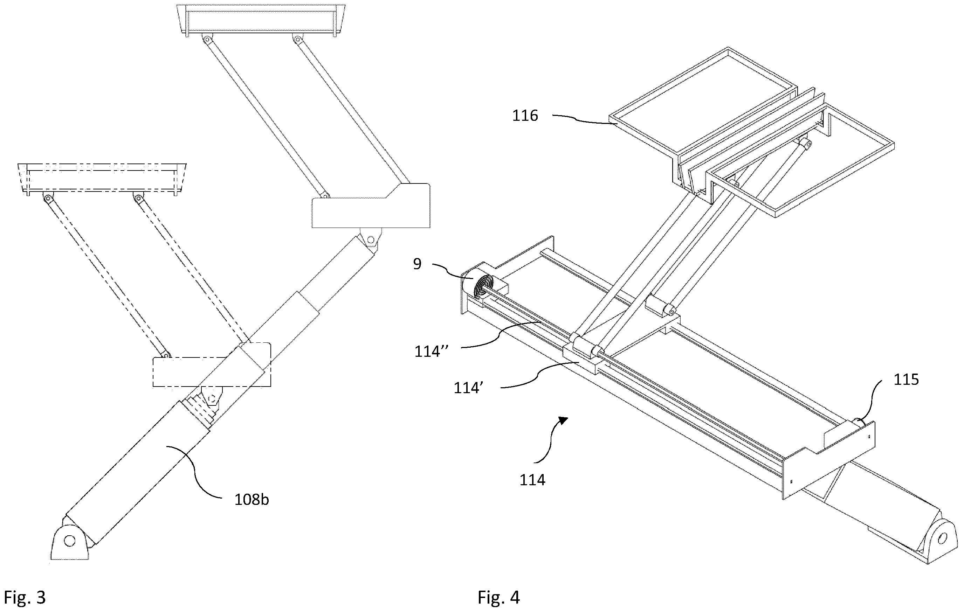

Fig. 3 shows a schematic side view illustration of another embodiment of the system (shown without the slotted element). Fig. 4 shows a perspective view of the same embodiment. The contact elements and first arm segments correspond to those shown in figs. 1-2, but the system differs in that the second arm segment 108b is telescopic and pivotable rather than being only pivotable as in figs. 1-2. A further difference is that the first end of the collector arm is provided with a guiding element 116 having a laterally extending body provided with a recess having a width corresponding to that of said slotted element. Further, as can be seen in fig. 4, the first arm segment is connected to the second arm segment via a sliding device 114. The hinge joints of the four parallel arm elements are attached to the slide 114' which slides on parallel rods of the lower part of the sliding device (which is connected via a hinge joint to the second arm segment 108b as can be seen in fig. 3). The forcing means (spiral torsional spring) 9 acts to rotate on the rod 114" to rotate/force the first arm segment upwards towards the slotted element. An actuator/motor 115 rotates the other rod to displace the slide 114' laterally.

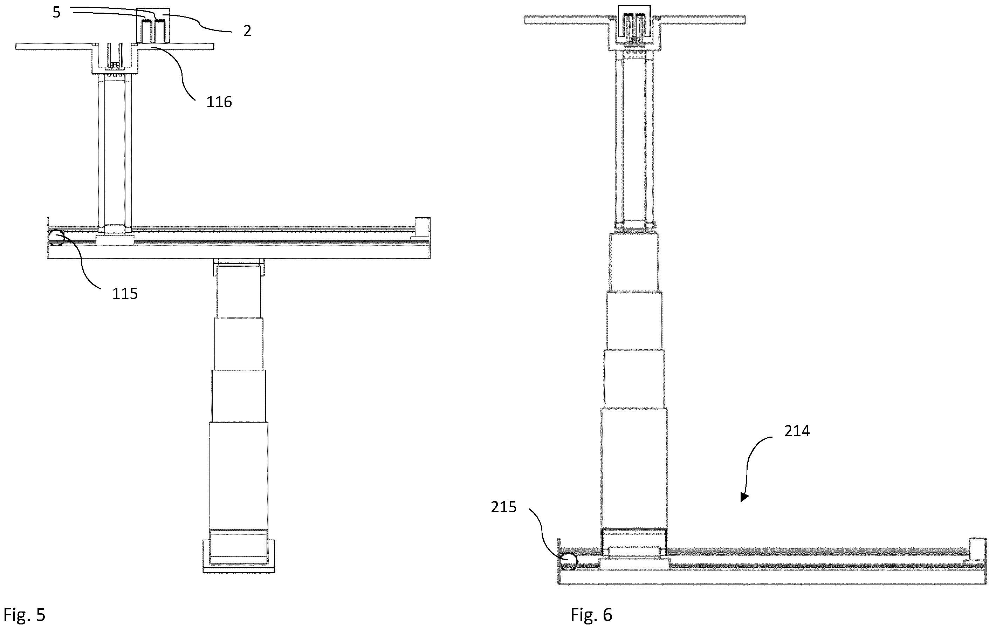

Fig. 5 shows a front view of the embodiment in figs. 3-4. In this figure, the slotted element is also shown. In the illustrated state, the contact elements are not yet in contact with the conductors in the slotted element. The ECU controls the motor 115 to displace slide 114' laterally to attempt to align the contact elements with the conductors. Due to the upwards force provided by the spiral torsional spring 9, once the contact elements are aligned laterally with the conductors, the guiding element will slide onto the slotted element and the contact elements will be forced into mechanical and electrical contact with the conductors.

Fig. 6 shows a front view of yet another embodiment of the system according to the invention. This embodiment corresponds to that shown in figs. 3-5 with the only difference being that the sliding device 214 is instead place at the second end of the collector arm, which is connected via a hinge joint to the slide of the sliding device. The first and second arm segments are connected to each other via a hinge joint too.

It is understood that the embodiment in figs. 1-2 is also preferably provided with a sliding device as shown in fig. 5 or 6.

The description above and the appended drawings are to be considered as non-limiting examples of the invention. The person skilled in the art realizes that several changes and modifications may be made within the scope of the invention. For example, lateral displacement of the contact elements does not necessarily require a sliding device, but may be achieved by rotating the collector arm in the lateral direction, for instance by means of a ball joint at the second end of the collector arm. Furthermore, the slotted element and current collector does not need to comprise two conductors/contact elements, but may comprise only one conductor/contact element (supplemented with a ground contact) or three or more conductors/contact elements.

### LIST OF EMBODIMENTS

1. System for electrically feeding at least one electrically powered vehicle (1), comprising at least one suspended elongated slotted element (2) extending along a road section (3) on which the at least one vehicle is adapted to travel, and at least one current collector (4) being adapted to co-act with said at least one elongated slotted element, said elongated slotted element comprising at least one electric conductor (5) arranged in at least one slot (6) in said elongated slotted element and being adapted to be electrically energized, said current collector (4) comprising:
   - at least one contact element (7) being adapted to connect mechanically and electrically with a corresponding electric conductor (5) of said elongated slotted element, and
   - at least one collector arm (8) supporting at least one contact element at its first end (8') and being adapted to directly or indirectly connect to an electrically powered vehicle with its second end (8"),

   wherein at least one collector arm (8) is formed by at least two serially arranged arm segments comprising first and second arm segments (8a, 8b) being directly or indirectly connected to each other,
   wherein said first arm segment (8a) comprises said first end (8') of the collector arm, said first arm segment being provided with forcing means (9) arranged to, when said first arm segment is within a working distance (10) from the elongated slotted element (2) , provide a force towards the elongated slotted element such that the at least one contact element (7) connects with the corresponding electric conductor (5),
   wherein said second arm segment (8b) is provided with at least one actuator (11) configured to act on the second arm segment to displace the first arm segment to a position within said working distance.
2. System according to embodiment 1, wherein said first arm segment (8a) and said forcing means (9) are configured such that displacement thereof is faster than displacement of the second arm segment (8b) by means of the at least one actuator (11).
3. System according to embodiment 1 or 2, wherein said first arm segment (8a) has a smaller moving mass and/or shorter length than the second arm segment (8b).
4. System according to any of the preceding embodiments, wherein said forcing means (9) is configured to provide a stronger force and/or shorter response time than said at least one actuator (11).
5. System according to any of the preceding embodiments, wherein said forcing means (9) is configured to provide said force being above a predetermined threshold value when said first arm segment (8a) is within a working distance from the elongated slotted element (2).
6. System according to any of the preceding embodiments, wherein said forcing means (9) comprises a resilient element providing a resilient force towards said corresponding electric conductor.
7. System according to any of the preceding embodiments, wherein said forcing means is formed by said first arm segment being at least partly formed from a resilient material.
8. System according to any of the preceding embodiments, wherein said forcing means comprises actuating means configured to provide said force.
9. System according to any of the preceding embodiments, wherein said first arm segment (8a) is directly or indirectly connected to the second arm segment (8b) by means of at least one rotational joint.
10. System according to any of the preceding embodiments, wherein said second arm segment (8b) comprises or is connected to at least one rotational joint (12) for directly or indirectly rotationally connecting the second arm segment to a vehicle.
11. System according to embodiment 10, wherein said at least one actuator (11) is configured to rotate the second arm segment (8b; 108b) around a rotational axis defined by the rotational joint (12) .
12. System according to any of the preceding embodiments, wherein said second arm segment (108b) is a telescopic arm directly or indirectly connectable to a vehicle.
13. System according to embodiment 12, wherein said at least one actuator is configured to extend and withdraw the telescopic arm (108b).
14. System according to any of the preceding embodiments, further comprising a sliding device (114) arranged between said first and second arm segments, said sliding device being configured to allow lateral movement of the first arm segment (108a) relative the second arm segment (108b).
15. System according to any of the preceding embodiments, further comprising a sliding device (214) arranged at the second end (208') of the collector arm (208) to allow lateral movement of the collector arm relative a vehicle.
16. System according to embodiment 14 or 15, wherein said at least one actuator comprises an additional actuator (115; 215) co-acting with the sliding device (114; 214) to actuate said lateral movement.
17. System according to any of the preceding embodiments, further comprising an electronic control unit (ECU) configured to control the at least one actuator of the second arm segment to displace the first arm segment to a position within the working distance.
18. Method for electrically feeding at least one electrically powered vehicle using a system according to any of the preceding embodiments, said method comprising:
   - controlling the at least one actuator of said second arm segment to displace the first arm segment to a position within said working distance.

## Claims

1. System for electrically feeding at least one electrically powered vehicle (1), comprising at least one suspended elongated conductive element (2) extending along a road section (3) on which the at least one vehicle is adapted to travel, and at least one current collector (4) being adapted to co-act with said at least one elongated conductive element, said at least one elongated conductive element being adapted to be electrically energized, said current collector (4) comprising:
- at least one contact element (7) being adapted to connect mechanically and electrically with a corresponding elongated conductive element, and
- at least one collector arm (8) supporting at least one contact element at its first end (8') and being adapted to directly or indirectly connect to an electrically powered vehicle with its second end (8"),
wherein at least one collector arm (8) is formed by at least two serially arranged arm segments comprising first and second arm segments (8a, 8b) being directly or indirectly connected to each other,
wherein said first arm segment (8a) comprises said first end (8') of the collector arm, said first arm segment being provided with forcing means (9) arranged to, when said first arm segment is within a working distance (10) from the elongated conductive element (2) , provide a force towards the elongated conductive element such that the at least one contact element (7) connects with the corresponding elongated conductive element (2),
wherein said second arm segment (8b) is provided with at least one actuator (11) configured to act on the second arm segment to displace the first arm segment to a position within said working distance.

2. System according to claim 1, wherein the first end of the collector arm (8) is provided with a guiding element (116) having a laterally extending body provided with a recess having a width corresponding to that of said at least one elongated conductive element.

3. System according to claim 2, wherein the guiding element (116) is configured to track onto the at least one elongated conductive element such that they are received in said recess to maintain lateral alignment between the at least one contact element and the at least one elongated conductive element.

4. System according to any of the preceding claims, wherein said first arm segment is formed by at least two parallel arm elements.

5. System according to any of the preceding claims, wherein said at least one elongated conductive element is self-supporting by being configured to support its own weight and/or by being configured to withstand forces exerted by the at least one current collector (4).

6. System according to any of the preceding claims, wherein said forcing means comprises actuating means configured to provide said force.

7. System according to claim 6, wherein said actuating means if furthermore configured to provide a force away from the elongated conductive element such that the at least one contact element (7) disconnects with the corresponding elongated conductive element.

8. System according to any of the preceding claims, wherein said first arm segment (8a) is directly or indirectly connected to the second arm segment (8b) by means of at least one rotational joint or by means of at least one ball joint.

9. System according to any of the preceding claims, wherein said second arm segment (8b) comprises or is connected to at least one rotational joint (12) for directly or indirectly rotationally connecting the second arm segment to a vehicle.

10. System according to claim 9, wherein said at least one actuator (11) is configured to rotate the second arm segment (8b; 108b) around one or more rotational axes defined by the at least one rotational joint (12).

11. System according to any of the preceding claims, wherein said first arm segment (8a) and said forcing means (9) are configured such that displacement thereof is faster than displacement of the second arm segment (8b) by means of the at least one actuator (11).

12. System according to any of the preceding claims, wherein said at least one actuator (11) is configured to act on the second arm segment to compensate for a varying distance between the vehicle and the at least one conductive element by maintaining the first arm segment within said working distance, and wherein said first arm segment (8a) has a smaller moving mass and/or shorter length than the second arm segment (8b) such as to handle quicker deviations of said varying distance.

13. System according to any of the preceding claims, wherein said forcing means (9) is configured to provide a shorter response time than said at least one actuator (11).

14. System according to any of the preceding claims, wherein said forcing means (9) is configured to provide said force being above a predetermined threshold value when said first arm segment (8a) is within a working distance from the elongated conductive element (2).

15. System according to any of the preceding claims, further comprising an electronic control unit (ECU) configured to control the at least one actuator of the second arm segment to displace the first arm segment to a position within the working distance.

16. System according to any of the preceding claims, wherein said collector arm is rotatably arranged for lateral displacement of the contact elements into lateral alignment with the at least one elongated conductive element.

17. System according to any of the preceding claims, wherein said second arm segment (108b) is a telescopic arm directly or indirectly connectable to a vehicle.
